# EUROPEAN PATENT SPECIFICATION

(11) **EP 1 564 030 B1**
(45) Date of publication and mention of the grant of the patent: **18.05.2011**
(21) Application number: 04028263.4
(22) Date of filing: 29.11.2004
(51) Int. Cl.: B60C 13/00

(54) **Pneumatic tire and method of making the same**
Reifen und Herstellungsverfahren
Bandage pneumatique et méthode de fabrication

(30) Priority: 10.02.2004 JP 2004033898
(43) Date of publication of application: 17.08.2005
(73) Proprietor: SUMITOMO RUBBER INDUSTRIES LIMITED, Kobe-shi, Hyogo-ken (JP)
(72) Inventor: Miki, Youjiro, Kobe-shi Hyogo-ken (JP)
(74) Representative: Manitz, Finsterwald & Partner GbR

(56) References cited:
- EP-A- 1 186 401
- EP-A- 1 216 852
- PATENT ABSTRACTS OF JAPAN vol. 2002, no. 09, 4 September 2002 (2002-09-04) & JP 2002 127718 A (SUMITOMO RUBBER IND LTD), 8 May 2002 (2002-05-08)

## Description

### BACKGROUND OF THE INVENTION

### Field of the Invention

The present invention relates to a pneumatic tire and method of making the same, in which a sidewall rubber is formed by a stacked-body obtained by winding a rubber strip in a tire circumferential direction, and more particularly to a pneumatic tire which can effectively prevent a sidewall rubber from being cracked.

### Prior Art

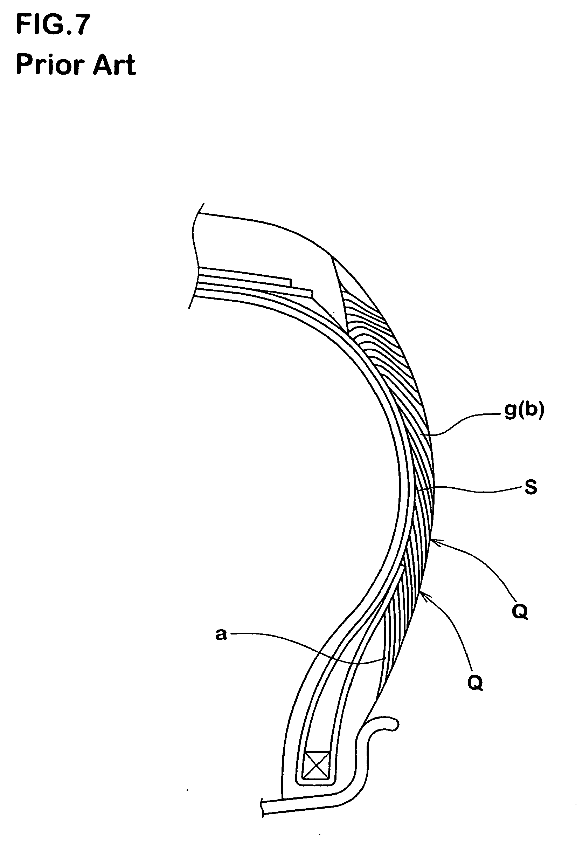

In recent years, as shown in FIG. 7, there is proposed a pneumatic tire in which a sidewall rubber g is formed by a stacked-body b obtained by spirally winding a ribbon-shaped unvulcanized rubber strip "a" in a tire circumferential direction.

Since the sidewall rubber mentioned above can be manufactured without using a large-sized rubber extruding machine, plant and equipment can be made compact. Further, it is unnecessary to carry out an operation of replacing and adjusting a nozzle in the rubber extruding machine which has been conventionally required per the kind of the tire. This is a great advantage in recent years having a strong tendency to a large item small scale production.

However, in general, in the sidewall rubber g, a boundary of joint S between the adjacent rubber strips forms a weak point in strength after being vulcanized. Further, the boundary of joint S appears in the outer surface of the sidewall rubber g. Further, a great strain is generated on the outer surface of the sidewall rubber when a load is applied. As a result, a crack starting from an exposure point Q in which the boundary of joint S appears on the outer surface tends to be generated in the sidewall rubber g constituted by the stacked-body b.

When the crack grows along the boundary of joint S, a durability of the tire is significantly lowered. In this case, the larger the overlapping width of the adjacent rubber strips is, the more the exposure point Q is generated on the outer surface of the sidewall portion. Accordingly, the crack mentioned above is more significantly generated in such a tire.

A pneumatic tire having the features of the preamble of claim 1 is known from EP-A-1 186 401.

### SUMMARY OF THE INVENTION

The present invention was made by taking the above problems into consideration, and an object of the present invention is to provide a pneumatic tire and a method of making the same which can effectively inhibit a crack from being generated on an outer surface of a sidewall portion without deteriorating an excellent productivity.

This object is achieved with a pneumatic tire having the features of claim 1 and a method for making a pneumatic tire having the features of claim 5. Subclaims are directed to preferable embodiments.

The invention provides for an improved structure of a stacked-body.

An embodiment of the present invention will now be described in detail in conjunction with the accompanying drawings.

### BRIEF DESCRIPTION OF THE DRAWINGS

FIG. 1 is a cross sectional view showing an embodiment of a pneumatic tire in accordance with the present invention;
FIG. 2 is a cross sectional view showing a rubber strip used therein;
FIG. 3 is a cross sectional view showing a step of building a green tire;
FIG. 4 is a cross sectional view showing a green tire;
FIG. 5 is a distribution map of a tensile strain generated on an outer surface of a sidewall;
Figs. 6A and 6B are views each showing an another embodiment of the step of building a green tire; and
FIG. 7 is a cross sectional view of a conventional pneumatic tire.

### DETAILED DESCRIPTION OF THE PREFERRED EMBODIMENTS

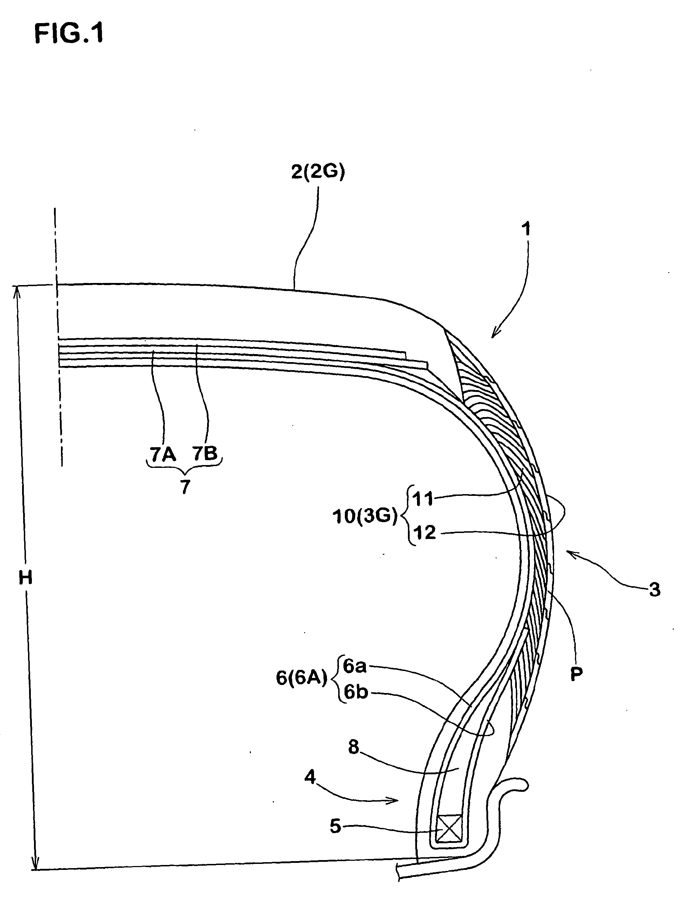

In FIG.1, a pneumatic tire 1 according to the present invention comprises a tread portion 2, a pair of sidewall portion 3, a pair of bead portions 4 with a bead core 5 therein, a carcass 6 extending between the bead portions 4, a belt 7 disposed radially outside the carcass 6 in the tread portion 2. In this embodiment, the tire is for passenger cars, and FIG. 1 shows a cross sectional view of the tire in a standard state in which the tire is mounted on a standard rim and inflated to a standard pressure but loaded with no tire load.

Hence, the standard rim is the "standard rim" specified in JATMA, the "Measuring Rim" in ETRTO, the "Design Rim" in TRA or the like, and in case of passenger car tires, however, 180 kPa is used as the standard pressure. The standard pressure is the "maximum air pressure" in JATMA, the "Inflation Pressure" in ETRTO, the maximum pressure given in the "Tire Load Limits at Various Cold Inflation Pressures" table in TRA or the like. In case of passenger car tires, however, 180 kPa is used as the standard pressure.

Further, in the present specification, dimensions in respective portions of a tire are constituted by values specified in the standard state, as far as another other specific definition is not applied.

The carcass 6 comprises at least one ply 6A of cords arranged radially at an angle of from 70 to 90 degrees with respect to the tire equator C, and extending between the bead portions 4 through the tread portion 2 and sidewall portions 3, and turned up around the bead cores 5 from the axially inside to the axially outside of the tire so as to form a pair of turnup portions 6b and a main portion 6a therebetween. For the carcass cords, steel cords and organic fiber cords, e.g. nylon, rayon, polyester, aromatic polyamide and the like can be used depending on the use of the tire.

Each bead portion 4 is provided between the carcass ply main portion 6a and turnup portion 6b with a rubber bead apex 8 extending and tapering radially outwardly from the bead core 5.

The belt 7 comprises at least two cross plies of rubberized parallel cords which are lied at an angle of from 15 to 35 degrees with respect to the tire equator. In this example, the belt 7 is composed of a radially outer ply 7B and a radially inner ply 7A.

Further, a sidewall rubber 3G is disposed axially outside the carcass 6 in each sidewall portion 3. In the present embodiment, a radially outer edge of the sidewall rubber 3G covers an axially outer edge of a tread rubber 2G. The tire mentioned above is called as a sidewall over tread (SOT) structure. The present invention is not limited to the tire having the structure mentioned above, for example, may be constituted by a tread over sidewall (TOS) structure in which the radially outer edge of the sidewall rubber 3G is covered by the axially outer edge of the tread rubber 2G.

The sidewall rubber 3G is formed by a stacked-body 10 obtained by winding a rubber strip P continuously in a tire circumferential direction.

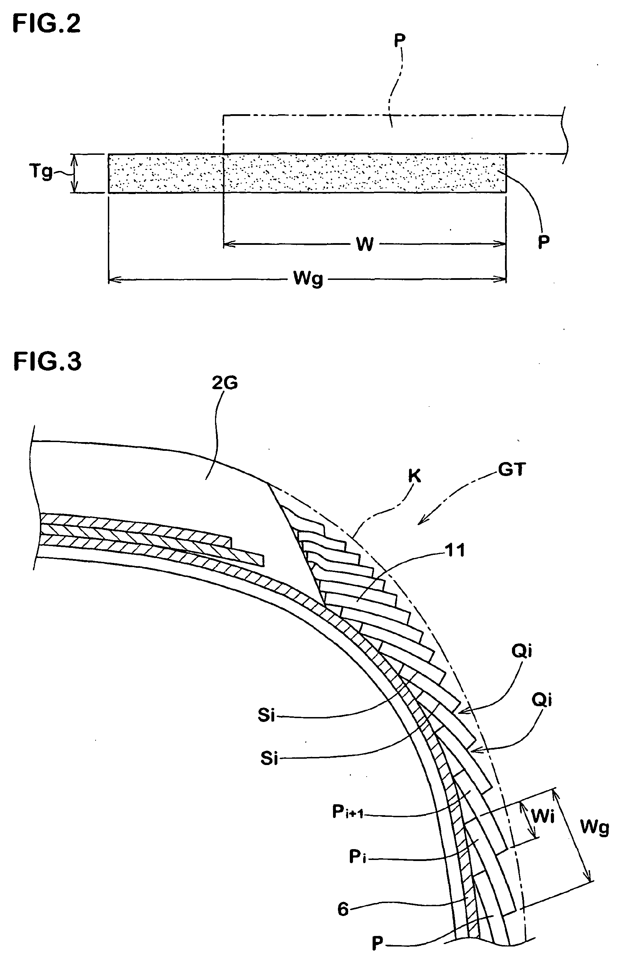

FIG. 2 shows an embodiment of a cross section of the unvulcanized rubber strip P. The rubber strip P is structured as a continuous ribbon shape.

The stacked-body 10 comprises an axially inner layer 11 disposed in a side of the carcass 6, and an axially outer layer 12 arranged in an outer side thereof and forming an outer surface 3S of the sidewall portion 3. The stacked-body 10 in accordance with the present embodiment is constituted by two layers comprising the inner layer 11 and the outer layer 12.

The method of making the pneumatic tire 1 as shown in Fig.1 comprises steps of building a green tire GT and vulcanizing the green tire GT in a mold.

Fig.3 shows a step of building the green tire GT in accordance with the present embodiment. In FIG. 3, the inner layer 11 is formed by directly winding the rubber strip P in an outer side of the carcass 6. In this embodiment, the unvulcanized rubber strip P is wound around the outer surface of the unvulcanized carcass 6 under a shaping state in which the carcass 6 is inflated in a toroid shape. Further, in the present embodiment, the rubber strip P is wound toward the side of the tread portion 2 from the side of the bead portion 4. Accordingly, the radially outer portion of the precedently wound rubber strip Pi is covered by the next wound rubber strip Pi+1. However, on the contrary, it is of course possible to wind the rubber strip P toward the side of the bead portion 4 from the side of the tread portion 2.

Further, in the inner layer 11, the rubber strip P is sequentially wound in the tire circumferential direction with an overlapping width Wi which is 30 to 90% of the rubber strip width Wg. The inner layer 11 forms a main portion of the stacked-body 10. Accordingly, in the present embodiment, the inner layer 11 has a comparatively larger thickness. In order to finish the stacked-body 10 in a desired finish cross sectional shape K, the inner layer 11 is finished in a cross sectional shape which is slightly smaller than the finish cross sectional shape K and is similar thereto. Further, in the inner layer 11, the rubber strip P is wound while appropriately changing the overlapping width Wi in a range of from 30 to 90% the rubber strip width Wg. Accordingly, it is possible to finish the inner layer 11 in the cross sectional shape which is similar to the various finish cross sectional shapes K. In this case, if the overlapping width Wi of the rubber strip P is less than 30% of the strip width Wg or larger than 90% thereof, there is a tendency that it is hard to obtain the desired cross sectional shape.

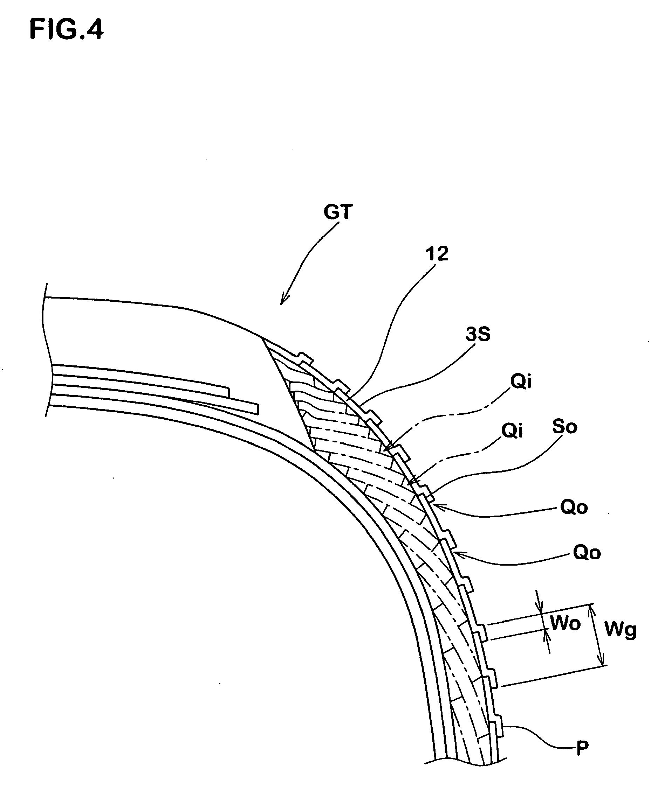

FIG. 4 shows a cross sectional view of the green tire GT, the outer layer 12 is formed by winding the rubber strip P in the outer side of the inner layer 11 in the circumferential direction of the tire. The outer layer 12 in accordance with the present embodiment is formed as a thin sheet-like coating layer. The outer layer 12 is structured, in the same manner as the inner layer 11, such that the rubber strip P is sequentially wound toward the side of the tread portion 2 from the side of the bead portion 4, however, may be inversely structured.

The rubber strip P of the outer layer 12 may be the same as the rubber strip P of the inner layer 11, or may be differentiated in the cross sectional shape, the rubber composition or the like. In the present embodiment, the rubber strip P of the outer layer 12 has substantially the same width Wg as that of the rubber strip P of the inner layer 11, however, is exemplified by the structure in which the thickness Tg is slightly smaller. In this case, the structure is not limited to this.

Further, in the outer layer 12, the rubber strip P is wound with the small overlapping width Wo which is not more than 20% of the strip width Wg. Accordingly, the outer layer 12 can cover an exposure point Qi of a boundary of joint Si of the rubber strip P formed by the inner layer 11, and can confine the exposure point Qi in the tire inner portion. Further, in the outer layer 12, the overlapping width Wo of the rubber strip P is small, the exposure point Qo of the boundary of joint So is smaller in comparison with the inner layer 11.

Hence, the strip width Wg is preferably in a range of from 5 to 50 mm, and a thickness Tg thereof is preferably in a range of from 0.5 to 3.0 mm. In the case that the width Wg is less than 5 mm, there is a tendency that a winding number for forming the stacked-body 10 is increased, and a working efficiency is deteriorated. On the contrary, in the case that the width Wg is more than 50 mm, it is hard to obtain a desired shape. Further, in the case that the thickness Tg of the rubber strip P is less than 0.5 mm, the rubber strip tends to be broken in the middle of winding, and the winding work becomes hard. On the contrary, in the case that the thickness Tg is more than 3.0 mm, a step-like great concavity and convexity is formed on the outer surface of the stacked-body 10. Since the concavity and convexity mentioned above tend to be left as a scratch after vulcanization and causes the crack, they are not preferable.

The pneumatic tire 1 is made by vulcanizing and molding the green tire GT in the mold. Therefore, in the pneumatic tire 1 in accordance with the present invention, since a lot of exposure points Qi are not formed on the surface of the sidewall rubber 3G, it is possible to effectively inhibit the crack from being generated. In the outer layer 12 of an unvulcanized state, the overlapping width Wo of the rubber strip P is preferably equal to or more than 1.0 mm, and more preferably equal to or more than 2.0 mm. In the case that the overlapping width Wo is less than 1.0 mm, there is a risk that the overlapping portions of the rubber strip P are displaced due to the stretch at the time of vulcanizing so as to be apart from each other, and this structure is not preferable.

Further, there is a tendency that the crack on the outer surface 3S of the sidewall portion is generated in accordance with an increase of the tensile strain ε in the tire radial direction generated in the outer surface 3S at the time of the tire deformation. Accordingly, in the present embodiment, the overlapping width Wo of the outer layer 12 is not more than 10% of the strip width Wg in a large-strain region Yε of the sidewall portion 3.

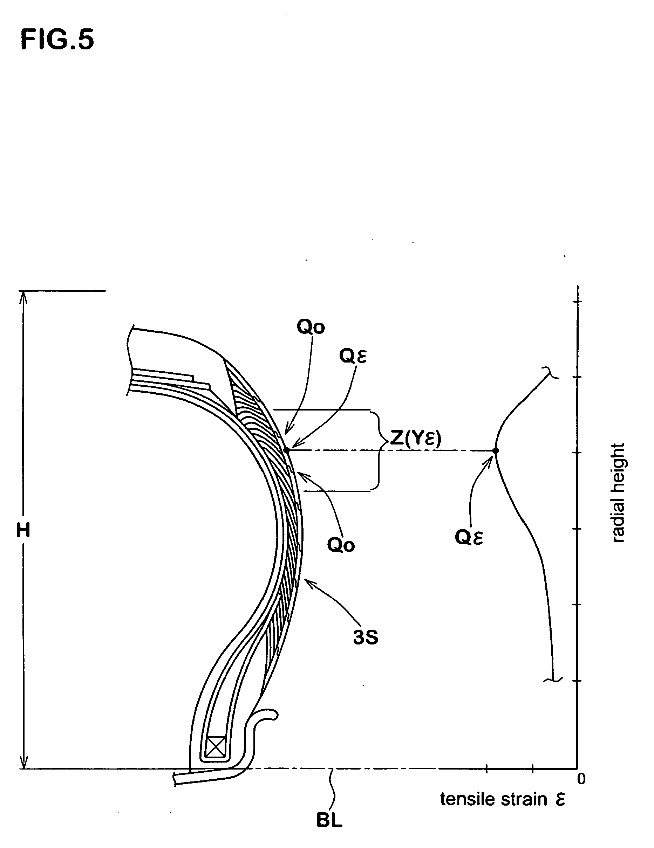

Hence, the large-strain region Yε is a circumferential region including a maximum strain position Qε as a center line thereof and having a width Z which is 20% of a tire height H (shown in FIG. 1). The maximum strain position Qε as shown in FIG.5 is a position in which the tensile strain ε in the tire radial direction generated on the outer surface 3S of the sidewall portion is a maximum in a standard load applying state. Further, the standard load applying state is a state that the tire is mounted on the standard rim and inflated by the standard pressure and loaded with a standard load. The standard load is the "maximum load capacity" in JATMA, 88% of the "Load Capacity" in ETRTO, the maximum value given in the above-mentioned table in TRA or the like.

FIG. 5 shows a relation between above tensile strain ε in the standard load applying state and a radial height from the bead base line BL. As is apparent from the drawing, the maximum strain position Qε is positioned near a buttress portion. Further, the tensile strain ε is comparatively largely generated in the large-strain region Yε around the maximum strain position Qε. Accordingly, it is possible to further reduce the exposure point Qo by making the overlapping width Wo of the rubber strip P of the outer layer 12 smaller to be equal to or less than 10% of the rubber strip width Wg, in the region Yε, and it is possible to inhibit the crack more effectively.

Further, for the same reason as mentioned above, it is possible to effectively inhibit the crack by displacing the position of the boundary of joint So of the rubber strip P in the outer layer 12 in the tire radial direction from the maximum strain position Qε.

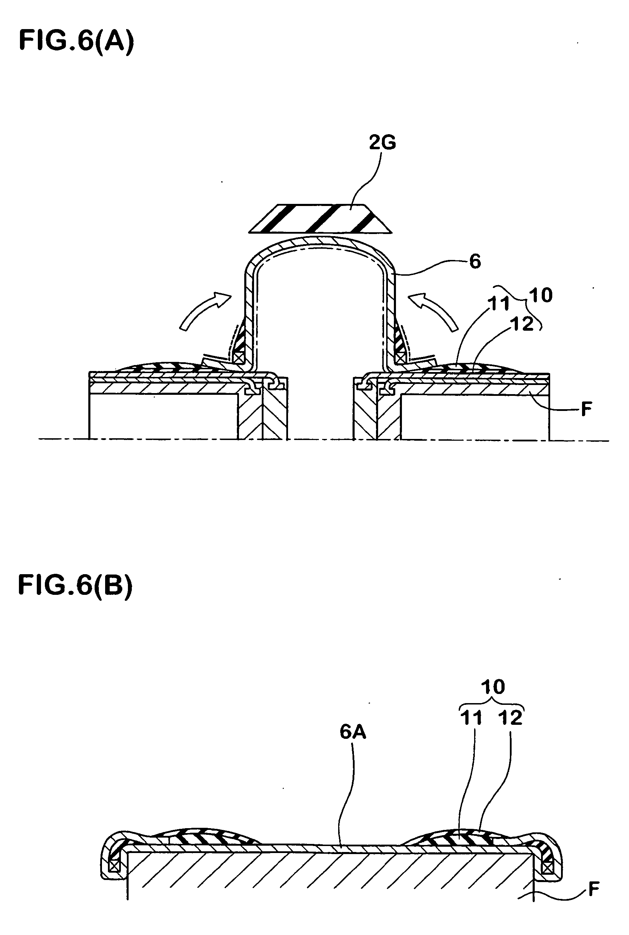

Further, in the case that the tire 1 has the SOT structure mentioned above, for example, as shown in FIG. 6A, the stacked-body 10 of the green tire may be formed by winding the rubber strip on a cylindrical former F. In this case, the outer layer 12 is first wound around an outer side of the former F, and thereafter, the inner layer 11 is wound around an outer side thereof. Further, the stacked-body 10 can be adhered in an inverted state to the side portion of the shaping state carcass 6 to which the tread rubber 2G has been adhered.

Further, in the case that the tire has the TOS structure, for example, as shown in FIG. 6B, the stacked-body 10 of the green tire may be formed by first winding the inner layer 11 around the outer side of the side portion of the cylindrical carcass ply 6A wound on the former F, and next winding the outer layer 12 sequentially, and thereafter the carcass ply 6A is shaped in the toroid shape and the tread rubber 2G is adhered thereto.

The description has been given in detail of the particularly preferable embodiments in accordance with the present invention, however, the present invention is not limited to the illustrated embodiments, and can be achieved by variously modifying.

### Comparison Tests

A crack resistance is estimated with respect to tires (size 195/55R15) manufactured by way of trial on the basis of the specification in Table 1. The overlapping widths Wi and Wo are shown as average values by measuring the overlapping widths of the respective rubber strips in respective transverse sections in four positions in the tire circumferential direction of the finished tire.

Further, the crack resistance is estimated by leaving the tire within the oven in a dry state at 80°C for twelve days, executing a drum test running at a speed of 50 km/h under a condition of an internal pressure (220 kPa) and a load (150% load of the standard load), and measuring a running time until the crack is generated in the outer surface of the sidewall. The estimation is displayed by an index obtained by setting Comparative Example 1 to 100. The larger the numerical value is, the better the crack resistance is.

The results of the test and the like are shown in Table 1, and it can be confirmed that the crack resistance in the tires of Examples is greatly improved.

**Table 1**

| | Comparative Example 1 | Example 1 | Example 2 | Example 3 | Example 4 | Comparative Example 2 | Comparative Example 3 |
|---|---|---|---|---|---|---|---|
| Sidewall rubber | Stacked-body | Stacked -body | Stacked -body | Stacked -body | Stacked -body | Stacked-body | Stacked-body |
| Rubber strip | | | | | | | |
| • Width Wg [mm] | 20 | 20 | 20 | 20 | 20 | 20 | 20 |
| • Thickness Tg [mm] | 1.0 | 1.0 | 1.0 | 1.0 | 1.0 | 1.0 | 1.0 |
| Inner layer | | | | | | | |
| • Overlapping width Wi [%] | 81 | 81 | 81 | 81 | 81 | 81 | 81 |
| Outer layer | | | | | | | |
| • Overlapping width Wo [%] | 81 | 11 | 19 | 6 | 0.5 | 32 | 48 |
| Crack resistance | 100 | 139 | 126 | 154 | 167 | 108 | 105 |

| | | | | | | | |
|---|---|---|---|---|---|---|---|
| *) Overlapping widths Wi and Wo are rate with respect to rubber strip width Wg | | | | | | | |

## Claims

1. A pneumatic tire (1) comprising:
a carcass (6) extending between bead portions through a tread portion (2) and a pair of sidewall portions (3); and
a sidewall rubber (3G) disposed axially outside the carcass (6) in each sidewall portion; wherein
the sidewall rubber is formed by a stacked-body (10) of a rubber strip (P) wound continuously in a tire circumferential direction, and
said stacked-body (10) comprises:
an axially inner layer (11) disposed in a side of the carcass (6) and around which the rubber strip is wound with an overlapping width (Wi) of from 30 to 90% the rubber strip width (Wg); and
an axially outer layer (12) arranged in an outer side of the inner layer (11) so as to form an outer surface (3S) of the sidewall portion (3) and around which the rubber strip is wound with an overlapping width (Wo) being not more than 20% the rubber strip width (Wg),
**characterized in that**
no boundary of joint (So) between the adjacent rubber strips in the outer layer (12) is located at a maximum strain position (Qε) in which a tensile strain (ε) in the tire radial direction generated in the outer surface (3S) of the sidewall portion (3) is maximum in a standard load applying state.

2. A pneumatic tire according to claim 1, wherein the rubber strip width (Wg) is in a range of from 5 to 50 mm.

3. A pneumatic tire according to claim 1, wherein the rubber strip (P) has a thickness of from 0.5 to 3.0 mm.

4. A pneumatic tire according to claim 1, wherein
the overlapping width of the rubber strip in the outer layer (12) is not more than 10% the rubber strip width in a large-strain region (Ye), and
wherein the large-strain region (Yε) is a circumferential region including the maximum strain position (Qε) as a center line thereof and having a width (Z) which is 20% of a tire height (H).

5. A method of making a pneumatic tire (1), wherein the method comprises steps of
building a green tire (GT), and
vulcanizing the green tire in a mold,
the green tire comprising:
a carcass (6) extending between bead portions (4) through a tread portion (2) and a pair of sidewall portions (3); and
a sidewall rubber (3G) disposed axially outside the carcass (6) in each sidewall portion (3); wherein
the sidewall rubber (3G) is formed by a stacked-body (10) of an unvulcanized rubber strip wound continuously in a tire circumferential direction, and
said stacked-body (10) comprises:
an axially inner layer (11) disposed in a side of the carcass (6) and around which the rubber strip (P) is wound with an overlapping width of from 30 to 90% the rubber strip width (Wg); and
an axially outer layer (12) arranged in an outer side of the inner layer (11) so as to form an outer surface of the sidewall portion and around which the rubber strip is wound with an overlapping width being not more than 20% the rubber strip width,
**characterized in that**
no boundary of joint (So) between the adjacent rubber strips in the outer layer (12) is located at a maximum strain position (Qε) in which a tensile strain ε in the tire radial direction generated in the outer surface (3S) of the sidewall portion (3) is maximum in a standard load applying state.

6. A method of making a pneumatic tire according to claim 5, wherein the rubber strip width (Wg) is in a range of from 5 to 50 mm.

7. A method of making a pneumatic tire according to claim 5 or 6, wherein the rubber strip (P) has a thickness of from 0.5 to 3.0 mm.

## Patentansprüche

1. Luftreifen (1), umfassend:
eine Karkasse (6), die sich zwischen Wulstabschnitten durch einen Laufflächenabschnitt (2) und ein Paar Seitenwandabschnitte (3) erstreckt; und
einen Seitenwandkautschuk (3G), der axial außerhalb der Karkasse (6) in jedem Seitenwandabschnitt angeordnet ist; wobei
der Seitenwandkautschuk durch einen Stapelkörper (10) aus einem Kautschukstreifen (P) gebildet ist, der kontinuierlich in einer Umfangsrichtung des Reifens gewickelt ist, und
wobei der Stapelkörper (10) umfasst:
eine axial innere Schicht (11), die auf einer Seite der Karkasse (6) angeordnet ist, um die herum der Kautschukstreifen mit einer Überlappungsbreite (Wi) von 30 bis 90 % der Kautschukstreifenbreite (Wg) gewickelt ist; und
eine axial äußere Schicht (12), die auf einer Außenseite der inneren Schicht (11) zum Bilden einer Außenfläche (3S) des Seitenwandabschnitts (3) angeordnet ist, um die herum der Kautschukstreifen mit einer Überlappungsbreite (Wo) gewickelt ist, die nicht größer als 20 % der Kautschukstreifenbreite (Wg) ist,
**dadurch gekennzeichnet, dass**
keine Übergangsgrenze (So) zwischen den benachbarten Kautschukstreifen in der äußeren Schicht (12) an einer Stelle maximaler Dehnung (Qε) angeordnet ist, in welcher eine Zugdehnung (ε) in der radialen Richtung des Reifens, die in der Außenfläche (3S) des Seitenwandabschnitts (3) erzeugt wird, in einem normalen Belastungszustand maximal ist.

2. Luftreifen nach Anspruch 1,
wobei die Kautschukstreifenbreite (Wg) in einem Bereich von 5 bis 50 mm liegt.

3. Luftreifen nach Anspruch 1,
wobei der Kautschukstreifen (P) eine Dicke von 0,5 bis 3,0 mm aufweist.

4. Luftreifen nach Anspruch 1, wobei
die Überlappungsbreite des Kautschukstreifens in der äußeren Schicht (12) nicht größer als 10 % der Kautschukstreifenbreite in einem Bereich großer Dehnung (Yε) ist, und
wobei der Bereich großer Dehnung (Yε) ein Umfangsbereich ist, der die Stelle maximaler Dehnung (Qε) als eine Mittellinie davon aufweist und eine Breite (Z) besitzt, die 20 % einer Reifenhöhe (H) beträgt.

5. Verfahren zum Herstellen eines Luftreifens (1), wobei das Verfahren die Schritte umfasst, dass
ein Rohreifen (GT) aufgebaut wird, und
der Rohreifen in einer Form vulkanisiert wird,
wobei der Rohreifen umfasst:
eine Karkasse (6), die sich zwischen Wulstabschnitten (4) durch einen Laufflächenabschnitt (2) und ein Paar Seitenwandabschnitte (3) erstreckt; und
einen Seitenwandkautschuk (3G), der axial außerhalb der Karkasse (6) in jedem Seitenwandabschnitt (3) angeordnet ist; wobei
der Seitenwandkautschuk (3G) durch einen Stapelkörper (10) aus einem unvulkanisierten Kautschukstreifen gebildet wird, der kontinuierlich in einer Umfangsrichtung des Reifens gewickelt wird, und
der Stapelkörper (10) umfasst:
eine axial innere Schicht (11), die auf einer Seite der Karkasse (6) angeordnet wird, um die herum der Kautschukstreifen (P) mit einer Überlappungsbreite von 30 bis 90 % der Kautschukstreifenbreite (Wg) gewickelt wird; und
eine axial äußere Schicht (12), die in einer Außenseite der inneren Schicht (11) zum Bilden einer Außenfläche des Seitenwandabschnitts angeordnet wird, um die herum der Kautschukstreifen mit einer Überlappungsbreite von nicht mehr als 20 % der Kautschukstreifenbreite gewickelt wird,
**dadurch gekennzeichnet, dass**
keine Übergangsgrenze (So) zwischen den benachbarten Kautschukstreifen in der äußeren Schicht (12) an einer Stelle maximaler Dehnung (Qε) angeordnet wird, in welcher eine Zugdehnung (ε) in der radialen Richtung des Reifens, die in der Außenfläche (3S) des Seitenwandabschnitts (3) erzeugt wird, in einem normalen Belastungszustand maximal ist.

6. Verfahren zum Herstellen eines Luftreifens nach Anspruch 5, wobei die Kautschukstreifenbreite (Wg) in einem Bereich von 5 bis 50 mm liegt.

7. Verfahren zum Herstellen eines Luftreifens nach Anspruch 5 oder 6, wobei der Kautschukstreifen (P) eine Dicke von 0,5 bis 3,0 mm aufweist.

## Revendications

1. Bandage pneumatique (1) comprenant :
une carcasse (6) s'étendant entre des portions de talon à travers une portion formant bande de roulement (2) et une paire de portions formant parois latérales (3) ; et
un caoutchouc de paroi latérale (3G) disposé axialement à l'extérieur de la carcasse (6) dans chaque portion formant paroi latérale ; dans lequel le caoutchouc de paroi latérale est formé par un corps empilé (10) d'un ruban de caoutchouc (P) enroulé en continu dans une direction circonférentielle du pneumatique, et
ledit corps empilé (10) comprend :
une couche axialement intérieure (11) disposée dans un côté de la carcasse (6) et autour de laquelle le ruban de caoutchouc est enroulé avec une largeur de chevauchement (Wi) de 30 à 90 % de la largeur (Wg) du ruban de caoutchouc ; et
une couche axialement extérieure (12) agencée dans un côté extérieur de la couche intérieure (11) de manière à former une surface extérieure (3S) de la portion de paroi latérale (3) et autour de laquelle le ruban de caoutchouc est enroulé avec une largeur de chevauchement (Wo) qui n'est pas plus de 20 % de la largeur du ruban de caoutchouc (Wg),
**caractérisé en ce que**
aucune frontière de joint (So) entre les rubans de caoutchouc adjacents dans la couche extérieure (12) n'est située à une position de contrainte maximum (Qε) dans laquelle une contrainte de traction (ε) dans la direction radiale du pneumatique engendrée dans la surface extérieure (3S) de la portion de paroi latérale (3) est maximum dans une situation d'application de charge standard.

2. Bandage pneumatique selon la revendication 1, dans lequel la largeur (Wg) du ruban de caoutchouc est dans une plage de 5 à 50 mm.

3. Bandage pneumatique selon la revendication 1, dans lequel le ruban de caoutchouc (P) a une épaisseur de 0,5 à 3,0 mm.

4. Bandage pneumatique selon la revendication 1, dans lequel la largeur de chevauchement du ruban de caoutchouc dans la couche extérieure (12) n'est pas plus de 10 % de la largeur du ruban de caoutchouc dans une région à forte contrainte (Yε), et
dans lequel la région à forte contrainte (Yε) est une région circonférentielle incluant la position de contrainte maximum (Qε) à titre de ligne centrale de celle-ci, et ayant une largeur (Z) qui est 20 % de la hauteur (H) du pneumatique.

5. Procédé pour fabriquer un bandage pneumatique (1), le procédé comprenant les étapes consistant à :
réaliser un pneumatique vert (GT), et
vulcaniser le pneumatique vert dans un moule,
le pneumatique vert comprenant :
une carcasse (6) s'étendant entre des portions de talon (4) à travers une portion formant bande de roulement (2) et une paire de portions formant parois latérales (3) ; et
un caoutchouc de paroi latérale (3G) disposé axialement à l'extérieur de la carcasse (6) dans chaque portion formant paroi latérale (3) ; dans lequel
le caoutchouc de paroi latérale (3G) est formé par un corps empilé (10) d'un ruban de caoutchouc non vulcanisé enroulé en continu dans une direction circonférentielle du pneumatique, et
ledit corps empilé (10) comprend :
une couche axialement intérieure (11) disposée dans un côté de la carcasse (6) et autour de laquelle le ruban de caoutchouc (P) est enroulé avec une largeur de chevauchement de 30 à 90 % de la largeur (Wg) du ruban de caoutchouc ; et
une couche axialement extérieure (12) agencée dans un côté extérieur de la couche intérieure (11) de manière à former une surface extérieure de la portion formant paroi latérale et autour de laquelle le ruban de caoutchouc est enroulé avec une largeur de chevauchement qui n'est pas plus de 20 % de la largeur du ruban de caoutchouc,
**caractérisé en ce que**
aucune frontière de joint (So) entre les rubans de caoutchouc adjacents dans la couche extérieure (12) n'est située à une position de contrainte maximum (Qε) dans laquelle une contrainte de traction (ε) dans la direction radiale du pneumatique générée dans la surface extérieure (3S) de la portion formant paroi latérale (3) est maximum dans un état d'application de charge standard.

6. Procédé de fabrication d'un bandage pneumatique selon la revendication 5, dans lequel la largeur (Wg) du ruban de caoutchouc est dans une plage de 5 à 50 mm.

7. Procédé de fabrication d'un bandage pneumatique selon la revendication 5 ou 6, dans lequel le ruban de caoutchouc (P) a une épaisseur de 0,5 à 3,0 mm.
